Europäisches Patentamt

(19) European Patent Office

Office européen des brevets

(11) Veröffentlichungsnummer: **0 016 998**
**B1**

(12) **EUROPÄISCHE PATENTSCHRIFT**

(45) Veröffentlichungstag der Patentschrift:
02.03.83

(51) Int. Cl.³: **B 66 F  7/02,** B 66 B  5/18

(21) Anmeldenummer: 80101148.7

(22) Anmeldetag: 07.03.80

(54) **Hubvorrichtung, insbesondere Hebebühne.**

(30) Priorität: 08.03.79  DE 2909171

(43) Veröffentlichungstag der Anmeldung:
15.10.80 Patentblatt 80/21

(45) Bekanntmachung des Hinweises auf die Patenterteilung:
02.03.83 Patentblatt 83/9

(84) Benannte Vertragsstaaten:
AT BE CH DE FR GB IT LU NL SE

(56) Entgegenhaltungen:
**CH-A-1 307**
**DE-A-2 649 769**
**DE-B-1 117 282**
**DE-B-1 283 475**
**DE-C-90 519**
**DE-U-7 926 126**
**FR-A-1 317 346**
**US-A-4 022 428**

(73) Patentinhaber: **Otto Nussbaum GmbH & Co.KG**
**Fertigungstechnik und Maschinenbau, Korkerstrasse 24,**
**D-7640 Kehl-Bodersweier (DE)**

(72) Erfinder: **Nussbaum, Hans, Dipl.-Ing., Korker Strasse 6,**
**D-7640 Kehl-Bodersweier (DE)**

(74) Vertreter: **Klingseisen, Franz, Dipl.-Ing. et al, Dr. F.**
**Zumstein sen. Dr. E. Assmann Dr. R. Koenigsberger Dr.**
**F. Zumstein jun. Dipl.-Ing. F. Klingseisen**
**Bräuhausstrasse 4, D-8000 München 2 (DE)**

Hubvorrichtung, insbesondere Hebebühne

Die Erfindung betrifft eine Hubvorrichtung, insbesondere eine Hebebühne, nach dem Oberbegriff des Anspruchs 1.

Aus der CH-A-1 307 ist es bei einer Hubvorrichtung bekannt, in gegenüberliegenden Säulen jeweils eine Gewindespindel vorzusehen, längs der beispielsweise die Kabine eines Fahrstuhls mittels einer an der Kabine befestigten Muffe verschiebbar geführt ist, die auf der Unterseite eine Bremsfläche aufweist. In einem Abstand unter dieser Bremsfläche der Muffe ist eine leichtgängige Mutter auf der Gewindespindel durch ein Führungselement verdrehbar geführt. Dieses Führungselement kann in Achsrichtung der Gewindespindel durch eine Stange verschoben werden, an der das Tragseil der Kabine befestigt ist. Reißt das Seil, so wird diese Stange verdreht und das Führungselement über einen Hebel verschoben, so daß die Mutter an der Bremsfläche der Muffe zum Anliegen kommt und die Kabine an der als Fangstange wirkenden Gewindespindel gehalten wird.

Die Gefahr bei dieser bekannten Hubvorrichtung besteht darin, daß eines der mechanischen Elemente zwischen Seilaufhängung und Mutter an der Fangstange blockiert wird, oder daß bei Seilriß an einer entlegenen Stelle die nachlassende Seilspannung nicht oder nicht vollständig auf diese mechanischen Elemente übertragen wird, so daß die Kabine nicht oder nicht mehr rechtzeitig angehalten wird, wenn das Seil reißt.

Der Erfindung liegt die Aufgabe zugrunde, eine Hubvorrichtung der eingangs angegebenen Art so auszubilden, daß ein Sicherheitsrisiko selbst bei Versagen von Bauteilen ausgeschaltet wird.

Diese Aufgabe wird durch die Merkmale im Kennzeichen des Anspruchs 1 gelöst. Die eine axiale Relativbewegung zwischen Mutter und Bremsfläche ermöglichende Einrichtung, welche die Mutter im normalen Betrieb der Hubvorrichtung in einem Abstand von der Bremsfläche am Hubschlitten hält, ist auf eine Feder beschränkt, wodurch sich ein einfacher Aufbau ergibt. Selbst wenn diese Feder brechen oder erlahmen sollte, wird durch die Anordnung der Feder auf der Oberseite der Mutter die Hubvorrichtung selbsttätig angehalten, so daß jegliches Sicherheitsrisiko ausgeschaltet ist. Neben einer Vereinfachung des Aufbaus der Vorrichtung wird auch der Vorteil erzielt, daß die leichtgängige Mutter geschützt innerhalb des Hubschlittens angeordnet werden kann, da sie unabhängig von dem den Hubschlitten ziehenden Element ist, wodurch eine zuverlässige Arbeitsweise unterstützt wird.

Vorteilhafte Ausgestaltungen der Erfindung sind in den Unteransprüchen angegeben.

Eine beispielsweise Ausführungsform der Erfindung wird nachfolgend anhand der Zeichnung näher erläutert. Es zeigt

Fig. 1 in einer schematischen Darstellung die Fangvorrichtung der Hubvorrichtung mit auf der Fangstange angeordneter Mutter in der Stellung während des normalen Betriebs,

Fig. 2 die Stellung der einzelnen Bauteile der Fangvorrichtung bei abgefangener Last und

Fig. 3 eine Gesamtansicht einer Zwei-Säulen-Hebebühne mit der eingebauten erfindungsgemäßen Sicherungsvorrichtung.

In den Figuren ist mit 1 eine Fangstange bezeichnet, die mit ihrem nicht dargestellten oberen Ende in einer Hubsäule einer Hebebühne aufgehängt ist. Diese feststehende Fangstange 1 ist über ihre Länge mit einem Gewinde versehen. Mit dem Gewinde der Fangstange steht eine Kugelumlaufmutter 2 in Eingriff, die auf beiden Seiten an Widerlagern 3 und 4 abgestützt ist, die an dem in der Hubsäule geführten Hubschlitten befestigt oder Teile des Hubschlittens sind. Bei dem dargestellten Ausführungsbeispiel ist ein die Mutter umgebendes und schützendes Gehäuse 5 vorgesehen, das ein Teil des Hubschlittens ist oder gesondert im Hubschlitten angeordnet und mit diesem fest verbunden werden kann. Dieses Gehäuse 5 dreht sich nicht, es wird lediglich auf der feststehenden Fangstange 1 durch die Bewegung des Hubschlittens nach oben und unten in der angegebenen Pfeilrichtung verschoben.

Die Kugelumlaufmutter 2 ist auf der Ober- und Unterseite jeweils mit einem Kugellager 6 versehen, an dem sich eine Druckfeder 7 abstützt, die an dem entsprechenden Widerlager 3 bzw. 4 anliegt. Beim normalen Betrieb der Hebebühne wird die Kugelumlaufmutter 2 vom Hubschlitten bzw. vom Gehäuse 5 elastisch mitgenommen, wobei sie sich auf der als Spindel ausgebildeten Fangstange 1 dreht.

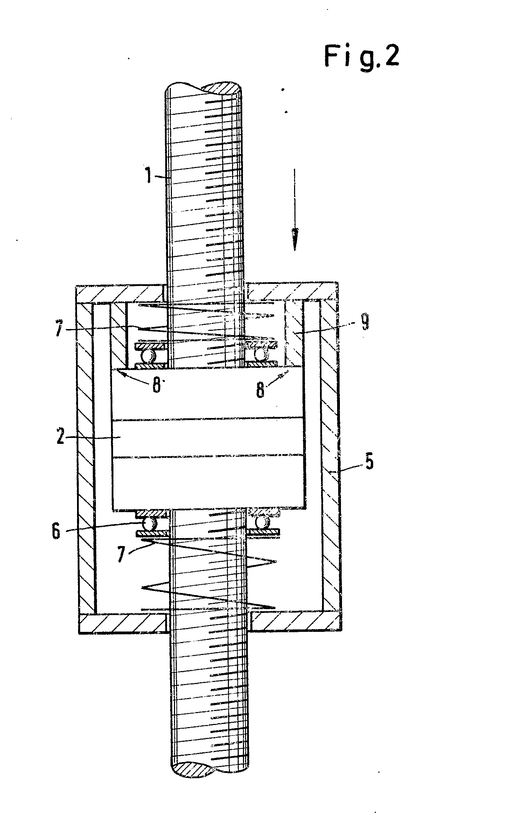

Bricht die Hubmutter an der anderen, mit Motor versehenen und angetriebenen Hubsäule oder reißt die den Hubschlitten mit dem Gehäuse 5 tragende Kette, so kommt augenblicklich die von diesem Hubschlitten getragene Last in der Richtung des Pfeils in Fig. 2 zur Wirkung, die den Hubschlitten bzw. das Gehäuse 5 schneller als bei der Senkbewegung während des normalen Betriebs nach unten drückt. In diesem Falle wird die entsprechend schwach ausgelegte obere Druckfeder 7 zusammengedrückt, da die Kugelumlaufmutter dieser beschleunigt einsetzenden Absenkbewegung des Gehäuses 5 nicht folgen kann, so daß das Gehäuse 5 mit einer Bremsfläche 8 auf der Kugelumlaufmutter 2 zum Anliegen kommt und eine Drehbewegung dieser Mutter auf der Fangstange 1 verhindert. Diese Stellung ist in Fig. 2 wiedergegeben. Die Bremsfläche 8 ist bei diesem Ausführungsbeispiel auf der Stirnseite eines Auflagerringes 9 ausgebildet, der im Gehäuse 5 befestigt ist. Durch die an der Bremsfläche 8 angreifende Last wird der Hubschlitten sicher durch die Kugelumlaufmutter 2 an der Fangstange 1 gehalten, trotzdem das Gewinde der Mutter 2 leichtgängig ist und keine Selbsthemmung aufweist.

Es sind verschiedene Abwandlungen der erfindungsgemäßen Bauweise möglich. So kann beispielsweise der Auflagerring **9** verstellbar am Gehäuse 5 befestigt sein, so daß der während des normalen Betriebs vorhandene Abstand zwischen der Bremsfläche 8 und der entsprechenden Gegenfläche auf der Kugelumlaufmutter 2 eingestellt werden kann. Anstelle der Kugellager 6 können entsprechende Gleitflächen an der Mutter 2 oder auch an Federtellern vorgesehen werden, die eine leichtgängige Relativbewegung zwischen den Federn 7 und der Mutter 2 zulassen. Anstelle einer Kugelumlaufmutter kann beispielsweise auch eine Planetenrollenmutter vorgesehen werden, die ebenfalls leichtgängig ist und keine Selbsthemmung aufweist.

Nach einer anderen Ausgestaltung kann die leichtgängige Mutter 2 mit einem konischen Abschnitt versehen sein, der in der Bremsstellung nach Fig. 2 mit einer entsprechend konischen Bremsfläche am Hubschlitten bzw. an dem Gehäuse 5 in Eingriff kommt.

Als Fangstange wird zweckmäßigerweise eine Gewindespindel mit gehärteter Oberfläche vorgesehen.

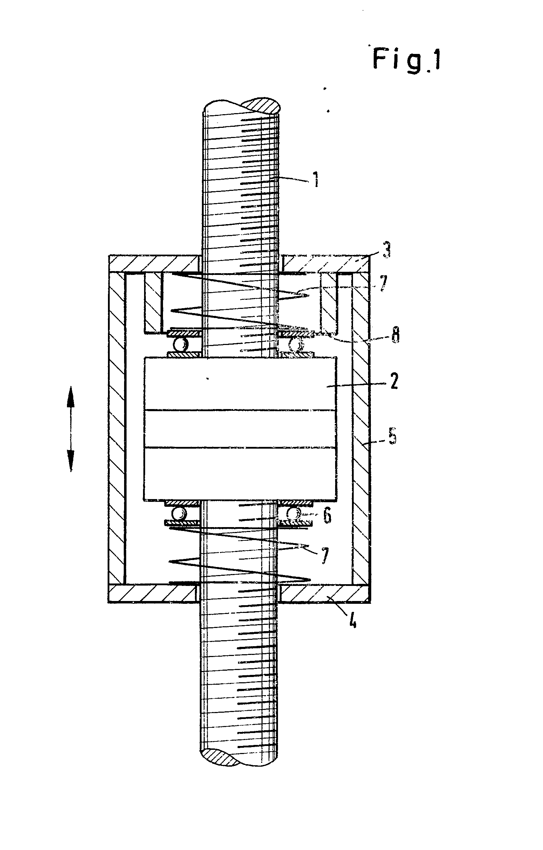

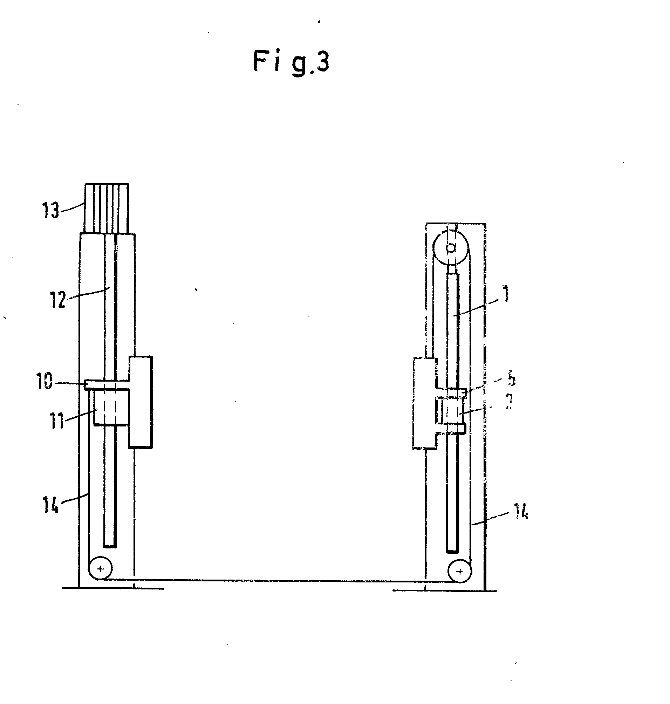

Die Fig. 3 zeigt eine Gesamtansicht einer Zwei-Säulen-Hebebühne, wobei an der linken Hubsäule der Hubschlitten 10 über eine Hubmutter 11 von einer Spindel 12 angetrieben wird, die von einem Motor 13 in Drehung versetzt wird. Der angetriebene Hubschlitten 10 ist über eine Kette oder ein Seil 14 mit dem Hubschlitten 5 an der anderen Hubsäule verbunden, so daß dieser synchron mit dem angetriebenen Hubschlitten 10 mitbewegt wird. Der Hubschlitten 5 wird längs der Fangstange 1 angehoben und abgesenkt. Im Hubschlitten 5 ist die in den Fig. 1 und 2 beschriebene Sicherungsvorrichtung angeordnet.

Der einfacheren Darstellung wegen sind die üblicherweise vorgesehenen Teleskoparme an den Hubschlitten nicht wiedergegeben.

## Patentansprüche

1. Hubvorrichtung, insbesondere Hebebühne, mit wenigstens einer Hubsäule, an der ein die Last aufnehmender Hubschlitten (5) längs einer an der Hubsäule befestigten, mit Gewinde versehenen Fangstange (1) verschiebbar ist, auf der eine leichtgängige Mutter (2) angeordnet ist, die am Hubschlitten (5) relativ zu diesem verdrehbar abgestützt ist, wobei am Hubschlitten eine Bremsfläche (8) ausgebildet ist, an der die Mutter (2) durch eine Einrichtung zur Anlage bringbar ist, welche eine Relativbewegung in Achsrichtung zwischen Mutter (2) und Hubschlitten (5) bei einer beschleunigten Bewegung des Hubschlittens ermöglicht, dadurch gekennzeichnet, daß die eine axiale Relativbewegung ermöglichende Einrichtung eine Feder (7) ist, die zwischen leichtgängiger Mutter (2) und Hubschlitten (5) angeordnet ist, wobei wenigstens auf der Oberseite der Mutter (2) eine Feder (7) vorgesehen ist.

2. Hubvorrichtung nach Anspruch 1, dadurch gekennzeichnet, daß zwischen Feder (7) und Mutter (2) ein Kugellager (6) angeordnet ist.

3. Hubvorrichtung nach Anspruch 1, dadurch gekennzeichnet, daß die Bremsfläche (3) an einem Auflagering (9) ausgebildet ist, der in einem geringen Abstand von der entsprechenden Gegenfläche der Mutter (2) angeordnet ist.

4. Hubvorrichtung nach Anspruch 3, dadurch gekennzeichnet, daß der Abstand der Bremsfläche (8) von der entsprechenden Gegenfläche an der Mutter (2) einstellbar ist.

5. Hubvorrichtung nach den vorhergehenden Ansprüchen, dadurch gekennzeichnet, daß die Bremsflächen zwischen Mutter (2) und Hubschlitten (5) einander entsprechend konisch ausgebildet sind.

6. Hubvorrichtung nach den vorhergehenden Ansprüchen, dadurch gekennzeichnet, daß die leichtgängige Mutter (2) eine Kugelumlaufmutter ist.

## Claims

1. Lifting mechanism, especially lifting platform comprising at least one lifting column at which a lifting carriage (5) that takes up the load is shiftable along a threaded catch rod (1) that is attached to the lifting column, on which catch rod an easily workable nut (2) is arranged that is supported at the lifting carriage (5) relatively rotatable to said carriage, whereby a braking surface (8) is provided at the lifting carriage, to which surface the nut (2) can be engaged by means of a device that makes possible an axially directed movement between nut (2) and lifting carriage (5) under accelerated movement of the lifting carriage, characterized in that the device making possible the axial relative movement is a spring (7) arranged between easily workable nut (2) and lifting carriage (5) whereby a spring (7) is provided at least at the upper side of the nut.

2. Lifting mechanism according to claim 1, characterized in that a ball bearing (6) is provided between spring (7) and nut (2).

3. Lifting mechanism according to claim 1, characterized in that the braking surface (3) is embodied at a supporting ring (9) that is provided in little distance from the corresponding counter surface of the nut (2).

4. Lifting mechanism according to claim 3, characterized in that the distance between surface (8) and corresponding counter surface of the nut (2) is adjustable.

5. Lifting mechanism according to the before mentioned claims, characterized in that the braking surfaces between nut (2) and lifting carriage (5) are conically formed corresponding to each other.

6. Lifting mechanism according to the before mentioned claims, characterized in that the easily workable nut (2) is a rotary ball nut.

## Revendications

1. Dispositif de levage, en particulier élévateur, comportant au moins une colonne de levage dans laquelle un chariot de levage (5), reçevant la charge, peut coulisser le long d'une tige (1) munie d'un filet, fixée à la colonne de levage, tige sur laquelle est monté un écrou (2) à frottement réduit, lequel est en appui contre le chariot de levage (5) de manière rotative par rapport à celui-ci, une surface de freinage (8) étant prévue sur le chariot de levage, surface contre laquelle l'écrou (2) peut être amené en contact par un dispositif qui permet un mouvement relatif suivant la direction axiale entre l'écrou (2) et le chariot de levage (5) lors d'un mouvement accéléré du chariot de levage, caracterisé par le fait que le dispositif permettant un mouvement relatif axial est constitué par un ressort (7) qui est disposé entre l'écrou (2) à frottement réduit et le chariot de levage, un ressort (7) étant prévu au moins du côté supérieur de l'écrou (2).

2. Dispositif de levage selon la revendication 1, caracterisé par le fait qu'une butée à billes (6) est disposée entre le ressort (7) et l'écrou (2).

3. Dispositif de levage selon la revendication 1, caracterisé par le fait que la surface de freinage (3) est agencée sous la forme d'un anneau d'appui (9) qui est placé à distance de la surface opposée correspondante de l'écrou (2).

4. Dispositif de levage selon la revendication 3, caracterisé par le fait que la distance de la surface de freinage (8) à la surface opposée correspondante de l'écrou (2) est réglable.

5. Dispositif de levage selon l'une quelconque des revendications précédentes, caracterisé par le fait que les surfaces de freinage entre l'écrou (2) et le chariot de levage (5) sont coniques, en correspondance l'une avec l'autre.

6. Dispositif de levage selon l'une quelconque des revendications précédentes, caracterisé par le fait que l'écrou (2) à frottement réduit est constitué par un écrou à circulation de billes.

Fig.1

Fig.2

# Fig.3